# EUROPEAN PATENT SPECIFICATION

(11) **EP 1 825 022 B1**
(45) Date of publication and mention of the grant of the patent: **17.04.2019**
(21) Application number: 05815290.1
(22) Date of filing: 09.11.2005
(51) Int. Cl.: C23C 22/34, C23C 22/36, C09D 5/12, C23C 22/00

(54) **PROCESS FOR PRODUCING A REPAIR COATING ON A COATED METALLIC SURFACE**
VERFAHREN ZUR HERSTELLUNG EINER REPARATURBESCHICHTUNG AUF EINER BESCHICHTETEN METALLISCHEN OBERFLÄCHE
PROCÉDÉ DE PRODUCTION D'UN REVÊTEMENT DE RÉPARATION SUR UNE SURFACE MÉTALLIQUE REVÊTUE

(30) Priority: 10.11.2004 US 985652; 04.04.2005 DE 102005015573; 04.04.2005 DE 102005015576; 04.04.2005 DE 102005015575
(43) Date of publication of application: 29.08.2007
(60) Divisional application: 10012642.4
(73) Proprietor: Chemetall GmbH, 60487 Frankfurt am Main (DE)
(72) Inventor: ERIKSSON, Mats, S-44252 Ytterby (SE); WALTER, Manfred, 63589 Linsengericht (DE)
(74) Representative: BASF IP Association
(86) International application number: PCT/EP2005/011955
(87) International publication number: WO 2006/050918

(56) References cited:
- EP-A- 0 153 973
- EP-A- 0 492 306
- EP-A- 0 687 715
- EP-A- 1 130 131
- EP-A2- 1 013 347
- WO-A-02/070781
- WO-A-03/083171
- WO-A1-2005/011879
- WO-A2-01/97984
- CH-A- 267 695
- DE-A1- 10 016 181
- DE-A1- 10 149 148
- DE-A1- 19 956 383
- JP-A- 2004 035 947
- US-A- 2 512 058
- US-A- 4 659 394
- US-A- 5 053 081
- US-A- 5 868 820
- US-A- 6 010 263
- US-A- 6 048 921
- US-A1- 2003 221 751
- US-B1- 6 319 351
- US-B1- 6 521 345
- US-B1- 6 794 046

## Description

### FIELD OF THE INVENTION

The present invention is directed to a process for producing a repair coating on at least one metallic surface that is already coated with at least one corrosion protection coating like a primer coating, a paint coating or a siloxane/polysiloxane rich coating or any combination of these coatings. Such repair may be of specific interest in the field of car production e.g. after the application of an e-coat, in the repair of a primed or painted car body or parts of it, in the repair of construction components, in the repair of bodies of aerospace or railcar bodies and other coated metallic surfaces.

### BACKGROUND OF THE INVENTION

During the production of car bodies and other coated metallic components, especially of coated metallic sheets, more preferred for hot, warm or cold formed metallic sheets, there are a lot of points and areas with flaws that may be seen after finishing e.g. of the painting process with a multilayer of paints which may be based e.g. of a primer coating like an electrocoated first paint coating, a base-coat and a clear-coat. The clear-coat may be used on top of the paint system. The flaws may be caused by the presence of particles, fibres, pieces of fluff and other materials generating flaws with a diameter or thickness of at least 10 µm or seldom of at least 4 µm diameter or thickness or e.g. by the agglomeration of at least predominantly organic material gathering to small, but significantly visual elevations in the ground or e.g. by big pores or craters. Such flaws may occur after every painting stage so that such areas often are treated by removing at least a part of the clear coating or the e-coat or both, perhaps even all the coatings in an area at and around each flaw so that in the middle of the area typically the surface of the blank metallic surface is uncovered and perhaps even taken away a thin part of the metallic base material. On the other hand, it may be necessary to remove at least one coating in an area that is damaged or that shows more or less corrosion like any form of rust. Then, e.g. the rust has to be removed. The removal of the coatings in such areas may occur e.g. by sanding, by sand-blasting, by grinding, by paint stripping the coated metallic components or by any combination of these. The paint stripping may occur with the aid of chemicals. This removal determines the size and shape of the removal area Z.

US 6,319,351 protects a process of improving the adhesive bonding of Al based material by degreasing, by a two-step silane coating and by an epoxy adhesive coating process. WO 03/083171 A1 discloses a conversion coating composition for (electro)deposition of substantially metallic coatings, whereby a silane sealing agent may be used as one of very many substances contained. US 4,659,394 refers to a process for the preparation of a highly anticorrosive surface-treated steel plate having a Zn/AI based plating layer, a chromate layer and a layer of an organic coating on the base of epoxy resin, silica and silane. DE 100 16 181 A1 describes a process for electrolytic coating of steel parts comprising the steps of galvanic zinc coating, phosphatizing and coating with a clearcoat on the base of Ti/Zr and organofunctional polysiloxane. US 5,053,081 mentions a composition and process for siccative coatings on the base of silane as well as titanium chelate, tetraalkyltitanate, beta-diketone and alkanolamine. EP 0 153 973 A1 refers to a treatment process of metal surfaces with a reactive organosilane solution containing Ti/Zr fluoride. EP 0 492 306 A1 discloses a method of coating steel with the process steps of rinsing the steel sheet with a silicate and metal salt containing alkaline aqueous solution, drying and rinsing then with a silane containing aqueous solution. EP 0 687 715 A1 describes an aluminium material coated with an aqueous composition on the base of synthetic resin, lubricant powder, silica particles and silane coupling agent. WO 01/97984 A2 discloses a method of coating a bare untreated metal substrate with a two-component urethane coating composition directly to the bare untreated metal and sanding the such coated metal substrate without applying a pretreatment. EP 1 013 347 A2 refers to a method of restoring the foul release effectiveness of a damaged foul release coating area on a metallic substrate like a ship's hull. CH 267 695 A concerns a process for the improvement of the chemical resistance of aluminium articles with a pretreatment or an anodizing and with a mineralized coating on the base of silicones, silicone resins, silicone paints or silicone rubbers. DE 199 56 383 A1 describes a process for the phosphating and post-rinsing of metallic surfaces, wherein the phosphating may be an iron or zinc phosphating and wherein the post-rinsing shall contain at least one silane and optionally copper ions. US 6,794,046 B1 protects articles having surfaces of magnesium or its alloys and a conversion coating on these comprising contents of MgO, Mn₂O₃, MnO₂ and at least one oxide of vanadium, molybdenum and tungsten; optionally, there is a polymer coating applied on top of the conversion coating comprising at least one polymerized or cross-linked alkoxysilane compound. US 6,521,345 B1 teaches to use a layered structure of a zinc material, a second layer of a thermosetting polymer of a powder paint and a third coating of an epoxysiloxane polymer in a total thickness of up to 6 mils = 152 µm; such structures shall be used on metallic articles to prevent corrosion and damage of outdoor devices. US 6,048,921 A describes a method of dispensing an acidic conversion coating composition of pH 1.5 to 4.5 with a handheld applicator having a port and a reservoir chamber for liquids and for flowable solids, which may be used for manual touching up of scratched parts and for manual repair. JP 2004-035947 A discloses a repair construction method using an anticorrosive paint which may inter alia contain a silane as well as titanium dioxide.

It was one object of the invention to propose a repair coating process which may be used in an automated process or may be used in an easier, a cheaper or better process than conventional repair processes. It was an object of the invention to propose a repair process with a less amount of primers or paints to be applied for repair than today typically used in praxis. It was further on an object of the invention to improve the corrosion resistance and paint adhesion of such coatings generated during a repair process.

### SUMMARY OF THE INVENTION

The present invention relates to a process for producing a repair coating on at least one metallic surface that is coated with at least one corrosion protection coating A applied with at least one composition selected from the group of
A1) pretreatment compositions like activating compositions, passivating compositions, phosphating compositions, titanium compound(s) or zirconium compound(s) or both of them containing compositions and after-rinse-compositions,
A2) organic compositions like primers, wet-primers, welding primers, e-coats, powder coats, base-coats and clear-coats and of
A3) silicon compound(s) containing compositions that are solutions or dispersions containing at least one silicon compound selected from silanes, silanols, siloxanes and polysiloxanes and,
whereby the at least one corrosion protection coating A has been at least partially removed in the area Z by grinding, sanding, sandblasting or paint stripping or any combination of them,
whereby a thin corrosion protection coating B containing at least one silicon compound is applied with a solution, dispersion or paste (= "siloxane composition") containing at least one silane, at least one silanol, at least one siloxane or any mixture of these on at least a part of the area Z
a) by spraying or
b) by contacting a tool that contains and dispenses the siloxane composition which is a solution or dispersion containing at least one silicon compound selected from silanes, silanols and siloxanes or
c) by using a tool with a storage chamber having a membrane or another porous material with the ability to transmit the siloxane composition from the storage chamber to the working surface of the tool or
d) by contacting with a tool that transmits or relieves a portion of a paste which is a composition containing at least one silicon compound selected from silanes, silanols and siloxanes when it is brought into contact with the surface to be coated,
whereby the siloxane composition is a solution or dispersion that contains at least one silicon compound selected from silanes, silanols and siloxanes as well as a content of at least one compound selected from compounds of complex fluorides or carbonates or nitrates or organic compounds of titanium, hafnium or zirconium or even any mixture of these. The composition may be a solution, a dispersion or at the same time a solution and a dispersion.

### DETAILED DESCRIPTION OF THE INVENTION

In the present application, the term "silane" or "siloxane" shall have in many circumstances the meaning of "at least one silicon compound selected from silanes, silanols, siloxanes and polysiloxanes having the related chemistry as well as their reaction products and derivates" as there is in many situations the continuous reaction from silanes to silanols, from silanols to siloxanes, from siloxanes to polysiloxanes and any combination of these reactions.

Preferably, the removal area Z is prepared in such way where it is intended to lay open the blank metallic material in such way that only a certain percentage of this area is laid open, e.g. a surface in the range of 40 to 85 % of this removal area Z. In such cases, it is easier to coat on the one-hand-side the blank metallic material completely with a thin film B, whereas it is avoided that a thin film B is applied outside the removal area Z. After the coating of at least a part of the removal area Z with at least one thin film of the coating B by applying a siloxane composition, there may be applied a coating C preferably only within the removal area Z or only on the removal area Z and in a small rim outside of it. Such coating C may preferably be prepared by application of a repair primer, a surface primer, a base-coat, a clear-coat or any combination of these. Alternatively, especially if the coating A that was at least partially removed was a coating A3 originally prepared with the aid of a siloxane composition, then it is more preferred to apply a coating C with the aid of a siloxane composition that is applied upon the coating B applied before with the aid of the same or another siloxane composition. In many cases it is preferred that the repair of an area to be repaired does not or nearly not show any difference to the surrounding coated area if there is applied at least one further coating C that is applied over the total surface.

### DETAILED DESCRIPTION OF THE INVENTION

The present invention concerns a repair coating process for the repair of the coatings of coated metallic surfaces to generate coatings being corrosion resistant and showing good adhesion for a further on it applied next coating.

The corrosion protecting coatings A, B, C or any combination of these are prepared by applying the respective compositions preferably and typically in a wet stage as a solution or dispersion or working at the same time as a solution and as a dispersion as well as by drying. Organic compositions may have optionally been further applied by heating up to cause a crosslinking. The organic corrosion protecting coatings A2 may optionally be coatings of primers or paints or specific organic compositions like welding primers.

The silanols as well as the siloxanes may be monomers, oligomers, polymers or any mixture of them. Therefore, any of the siloxane compositions for the coatings A, B, C or any combination of these may contain any mixture of compounds selected from the group of the monomers of silanes, silanols and siloxanes, of oligomers of silanols and siloxanes and of polymers of silanols and siloxanes whereby the last ones are polysiloxanes. In the following, the "siloxane composition" means a solution or a dispersion that contains at least one silane, at least one silanol, at least one siloxane, or any mixture of these.

The coating(s) A has/had been applied before, often during the first coating(s) for the production of the coated part. After a removal of at least a part of the at least one coating on this part that has to be protected like a car body element or a car body, at least one thin film B may be applied in the removal area and optionally later at least one coating C may be applied at least in the coated removal area. According to the process of the invention, a thin film B of the siloxane composition is applied which is preferably without particles, fibres, pieces of fluff and other materials generating flaws having a diameter or thickness of no more than 10 µm, more preferred of no more than 8 µm, most preferred of no more than 6 µm, especially of no more than 4 µm.

According to the process of the invention, a thin film B of the siloxane composition is applied which preferably has a wet film thickness in the range from 0.005 to 40 µm, more preferred in the range from 0.01 to 30 µm or from 0.02 to 22 µm, most preferred in the range from 0.03 to 15 µm or from 0.05 to 10 µm.

The thin film B of the siloxane composition is applied which preferably has a dry film thickness in the range from 0.001 to 3 µm, more preferred in the range from 0.003 to 2 µm or from 0.005 to 1 µm, most preferred in the range from 0.008 to 0.5 µm, often in the range from 0.01 to 0.2 µm. If necessary to reach the required film thickness, the thin film B may be applied at least two times one after the other.

According to the process of the invention, a thin film B of the siloxane composition is applied and this thin film is then dried, e.g. at a temperature in the range from 5 to 300 °C, more preferred the thin film B is then dried at a temperature in the range from 10 to 250 °C, most preferred it is then dried at a temperature in the range from 12 to 150 °C, especially it is then dried at a temperature in the range from 14 to 125 °C. In many cases there is the further relationship that the higher the temperature, the lower may be the time of heating and vice versa.

This thin film B is preferably applied with the siloxane composition and dried by self-drying e.g. at about room temperature for example in the range from 15 °C to 36 °C or at a temperature in the range from 5 °C to 180 °C, in the range from 6 °C to 95 °C or in the range from 8 °C to about 60 °C, by heating the coated metallic substrate, by heating with hot air, by blowing or heating with a hot gas stream or by any combination of these.

According to the process of the invention, a thin film B of the siloxane composition is applied by contacting a tool that contains and dispenses the siloxane composition or the thin film B of the siloxane composition is applied by spraying the siloxane composition e.g. with a spray can like an aerosol can or with an automated spraying instrument like e.g. an airless high pressure spray instrument, especially for a long-term discontinuous spraying of the siloxane composition. Especially for a spraying process, it may be helpful to take care for an adequate viscosity of the siloxane composition and that no drops will be generated. Alternatively, the thin film B of the siloxane composition is applied by using a tool that has a storage chamber for the siloxane composition. Alternatively, the thin film B of the siloxane composition is preferably applied by using a tool like a brush, like a sponge, like a tampon, like a stick or like a gel-pack. This stick may essentially have the shape of a stick or may essentially have the shape of a box, e.g. a flat box, having essentially the function of a stick like a paint stick. Such stick or box may have a membrane or any similar porous material or may alternatively have no membrane and no similar porous material if the solution or dispersion of the siloxane composition has an adequate consistency e.g. of a paste. Alternatively, a thin film B of the siloxane composition is applied by using a tool with a storage chamber having a membrane or another porous material with the ability to transmit the siloxane composition from the storage chamber to the working surface of the tool. The materials of the tool that are in contact with the siloxane composition should either not chemically react with the siloxane composition or only react in such way and extent that the coating and repair process and the properties of the resulting coatings are not impaired.

According to the process of the invention, the siloxane composition has preferably a viscosity in the range from 1 to 250 mPa·s measured at 20 °C. In some embodiments, the viscosity may show values measured according to DIN 53211 4 mm-cup at 20 °C in the range from 5 to 45 s, especially in the range from 10 to 40 s. Alternatively, the solution or dispersion of the siloxane composition may have a viscosity in such way that it is a paste.

According to the process of the invention, the siloxane composition is applied to at least one metallic surface preferably of iron, steel, zinc-coated or zinc-alloy-coated steel, aluminium, aluminium alloy, magnesium alloy, titanium, titanium alloy or to any combination of these. The zinc-containing metallic coatings used may especially be: Electrogalvanised steel, hot-dip-galvanised steel, galvalume®, galfan® and galvannealed®.

Today, many components, car bodies including the bodies e.g. of busses and lorries or any mounted metallic parts consist of at least two different metallic materials as surface materials which may be metallic coatings, metallic sheets, metallic parts or joined metallic elements. Therefore, there may be metallic surfaces one beneath the other or one part after the other part of different metallic materials between the first and the next part, that belong to different alloys or even to significantly different metallic materials e.g. like steel, zinc-coated steel or aluminium alloys. Processes for coating such "multi-metal" applications must be able to coat the different metallic materials with an adequate coating quality, especially for corrosion resistance and paint adhesion, which is often not self-understanding.

According to the process of the invention, the siloxane composition may even be successfully applied to at least one surface of at least one part showing at least two different materials at its surface(s), being made of at least one metallic material, of at least one plastics material like a foil, multilayer, sheet or component of plastics material, of at least one glass material, of at least one ceramic material, of at least one wooden material or of any mixture of these.

According to the process of the invention, the siloxane composition used for the coating A, B, C or any combination of these may be applied to at least one metallic surface of at least one sheet, to at least one complex formed part, to at least one massive part or any mixture of these. The siloxane composition may especially be applied to at least one metallic surface of a coil, of a metallic sheet, of a car body including bodies e.g. of busses and lorries, of parts of a car, of a body of an aerospace, of a ship, of offshore-equipment, of a railcar or of any parts of them, of parts or composed parts for construction, furniture, devices, equipment or specific elements like lamps - especially either during production or after damage or after long-term use. Further on, the repair process may not only be applied for the repair of freshly produced components during production, but even for a repair e.g. after any damage or when removing rust during the lifetime of these components. Therefore, the repair process according to the invention may be even used e.g. in a workshop for car repair or in the repair of construction elements like bridges or of offshore aggregates after long-time use.

According to the process of the invention, the at least one corrosion protection coating A has been removed at least partially in the area Z by grinding, sanding, sandblasting or paint stripping or any combination of them. The coating(s) A may be removed partially or totally 1. by only removing a part of the top of the top coating of the corrosion protecting coating(s) A, 2. by only removing the corrosion protection coating A on top of at least two corrosion protecting coatings A or 3. by removing at least two or even all corrosion protecting coatings A or 4. by removing all corrosion protecting coatings and part of the metallic surface, 5. perhaps even by removing a further intermediate layer of the pretreatment of the metallic surface(s). Often, there will be any combination of these types of removals 1. to 5.. Often, there is only the corrosion protection coating A on the top of at least two corrosion protecting coatings A removed at the outer rim of the removal area Z where the removal of the coatings A is less strong. Often, the only one existing corrosion protection coating A respectively all the corrosion protecting coatings A are totally removed in the middle of the removal area Z. Then there is often even a removal of the surface part of the metallic surface in the middle of the removal area Z. Often, even the very thin zinc-rich metallic coatings are totally removed in the middle of the removal area Z.

According to the process of the invention, at least one corrosion protection coating C may be further on applied upon the thin film B whereby the coating C is generated with an organic composition like a primer, a wet-primer, an e-coat, a powder coat, a base-coat or a clear-coat or with a coating with the same or with another siloxane composition as for the thin film B or with a composition intermediate between the composition of an organic coating and a siloxane coating or with a succession of applications of such compositions, whereby at least one coating C may optionally be applied on a great portion or on the total surface of the coated metallic part. In several cases that are to be foreseen, there will be used at least one composition for the production of at least one organic coating C like a primer, perhaps followed by a base-coat and perhaps even then followed by a clear-coat. In other cases, there will be used at least one composition for the production of at least one organic coating C like a base-coat, perhaps followed by a clear-coat. On the other hand, in the future perhaps there may repair methods be used by selecting a composition for a coating C containing at least one silicon compound selected from silanes, silanols, siloxanes, whereby in many cases the content of the at least one silicon compound may be at least 30 % by weight of the total of solids in the solution or dispersion of this composition, in some cases at least 40 % by weight of the total of solids in the solution or dispersion of this composition, in several cases at least 50 % by weight of the total of solids in the solution or dispersion of this composition or even at least 60 % by weight of the total of solids in the solution or dispersion of this composition, in few cases at least 70 % by weight of the total of solids in the solution or dispersion of this composition, at least 80 % by weight of the total of solids in the solution or dispersion of this composition or even at least 90 % by weight of the total of solids in the solution or dispersion of this composition, in very few cases at least 95 % by weight of the total of solids in the solution or dispersion of this composition, in singular cases even at least 98 % by weight of the total of solids in the solution or dispersion of this composition. In specific embodiments of this invention, the coating C may contain constituents as typically contained in organic coatings and at the same time may contain constituents as typically contained in coatings formed from siloxane compositions. Such coatings may more or less be intermediate in their compositions and in their properties between organic coatings and coatings prepared from siloxane compositions.

According to the process of the invention, the composition for at least one coating A containing at least one silicon compound selected from silanes, silanols, siloxanes and polysiloxanes may in many cases show a content of the at least one silicon compound of at least 30 % by weight of the total of solids in the solution or dispersion of this composition, in some cases at least 40 % by weight of the total of solids in the solution or dispersion of this composition, in several cases at least 50 % by weight of the total of solids in the solution or dispersion of this composition or even at least 60 % by weight of the total of solids in the solution or dispersion of this composition, in few cases at least 70 % by weight of the total of solids in the solution or dispersion of this composition, at least 80 % by weight of the total of solids in the solution or dispersion of this composition or even at least 90 % by weight of the total of solids in the solution or dispersion of this composition, in very few cases at least 95 % by weight of the total of solids in the solution or dispersion of this composition, in singular cases even at least 98 % by weight of the total of solids in the solution or dispersion of this composition.

According to the process of the invention, the composition for at least one coating B containing at least one silicon compound selected from silanes, silanols, siloxanes or any mixture of these may in many cases show a content of the at least one silicon compound may be at least 30 % by weight of the total of solids in the solution or dispersion of this composition, in some cases at least 40 % by weight of the total of solids in the solution or dispersion of this composition, in several cases at least 50 % by weight of the total of solids in the solution or dispersion of this composition or even at least 60 % by weight of the total of solids in the solution or dispersion of this composition, in few cases at least 70 % by weight of the total of solids in the solution or dispersion of this composition, at least 80 % by weight of the total of solids in the solution or dispersion of this composition or even at least 90 % by weight of the total of solids in the solution or dispersion of this composition, in very few cases at least 95 % by weight of the total of solids in the solution or dispersion of this composition, in singular cases even at least 98 % by weight of the total of solids in the solution or dispersion of this composition.

According to the process of the invention, the siloxane composition for the generation of the corrosion protecting coating(s) A, B, C or any combination of them are solutions or dispersions that contain at least one silicon compound selected from the group of silanes, silanols, siloxanes and polysiloxanes. More preferred, the total content of the at least one silicon compound is in the range of 0.1 to 250 g/L, in the range of 0.5 to 210 g/L or in the range of 1 to 155 g/L, in many cases more preferred in the range of 2 to 180 g/L, 3 to 130 g/L, 4 to 80 g/L, 5 to 60 g/L, 6 to 40 g/L, 7 to 25 g/L or 8 to 15 g/L, much more preferred in the range of 10 to 120 g/L, e.g. each of about 0.1, 0.2, 0.3, 0.4, 0.5, 0.6, 0.7, 0.8, 0.9, 1, 1.2, 1.4, 1.6, 1.8, 2, 2.5, 3, 4, 5, 6, 8, 10, 12, 14, 16, 18, 20, 22, 24, 26, 28, 30, 32, 34, 36, 38, 40, 42, 44, 46, 48, 50, 52, 54, 56, 58, 60, 62, 64, 66, 68, 70, 72, 74, 76, 78, 80, 82, 84, 86, 88, 90, 92, 94, 96, 98, 100, 102, 104, 106, 108, 110, 112, 114, 116 or 118 g/L. In other cases, the content of the at least one silicon compound is in the range of 0.1 to 25 g/L, more preferred in the range of 0.12 to 20 g/L, 0.15 to 15 g/L, 0.2 to 10 g/L, 0.25 to 8 g/L, 0.3 to 6 g/L, 0.35 to 4 g/L or 0.4 to 2 g/L. Especially, if the composition A, B, C or any combination of these show(s) an addition of at least one compound containing titanium, hafnium, zirconium, aluminium and boron, but even in other cases too, the total content of the at least one silicon compound selected from the group of silanes, silanols, siloxanes and polysiloxanes may be lower than written above, preferably in the range from 0.05 to 10 g/L or of 0.08 to 6 g/L, often in the range from 0.1 to 2.5 g/L or even from 0.15 to 0.5 g/L. It has now been found that compositions containing at least one silicon compound and at least one compound containing titanium, hafnium, zirconium, aluminium, boron or any combination of these may be applied in significantly thinner wet respectively dry coatings than compositions only on the base of at least one silicon compound - often without loosing the high quality of corrosion resistance and paint adhesion. Preferably, at least one silane, at least one silanol, at least one siloxane, at least one polysiloxane or any of these mixtures is chosen which is compatible with water, i.e. that the at least one silicon compound and, where appropriate, its hydrolysis products, its condensation products and its reaction products are miscible with the components of the aqueous composition without problems and are stable for at least several weeks. Preferably, it allows the formation of a defect-free wet film and dry film which, in particular, is essentially closed, essentially uniform and free from craters. In particular, at least one silane, at least one silanol, at least one siloxane, their derivatives, any of their reaction products or any of their mixtures is chosen which renders possible a high corrosion resistance and high adhesion to the coating C. Such chemical reaction may occur between any constituents present in the solution or dispersion, even with further added or present components like additives or impurities.

The siloxane composition may more preferred contain predominantly at least one silane, at least one silanol, at least one siloxane, at least one polysiloxane, their derivatives, their reaction products or any of their mixtures in an aqueous solution or dispersion or in a solution or dispersion containing water and optionally at least one organic solvent. The presence of at least one silane, at least one silanol, at least one siloxane, at least one polysiloxane, their derivatives, their reaction products or any of their mixtures offers the advantage that chemical bonds like covalent bonds or ionic bonds are formed between the substrate and the dried protective film and to primer/paint layers or to other organic or siloxane/polysiloxane coatings possibly subsequently applied, as a result of which an improved "paint" adhesion is also achieved. A further advantage is that suitable silanes/silanols/siloxanes/polysiloxanes generate crosslinkings like chemical bonds within the dried protective film, which often considerably improve the strength and the adhesion to the substrate, as a result of which an improved adhesion is achieved in many paint systems.

Preferably, the siloxane composition suitable for the coating(s) A, B, C or any combination of these contains at least one acyloxysilane, one alkoxysilane, one silane with at least one amino group such as an aminoalkylsilane, one silane with at least one succinic acid group or succinic acid anhydride group, one bis-silyl-silane, one silane with at least one epoxy group such as a glycidoxysilane, one (meth)acrylato-silane, one multi-silyl-silane, one ureidosilane, one vinylsilane, at least one of its silanols, at least one of its siloxanes, at least one of its polysiloxanes, at least one of their derivatives, at least one of their reaction products or any of their mixtures. The reaction products of the silanes are known in principle in such systems and are therefore not mentioned individually. They are therefore also not referred to further in the following.

The siloxane composition may contain e.g. at least one silane mixed with a content of at least one alcohol, such as ethanol, methanol or propanol or any mixture of them, e.g. of up to 8 wt.%, based on the silane content, preferably up to 5 wt.%, particularly preferably up to 1 wt.%, very particularly preferably up to 0.5 wt.%, often being in the range from 0.01 wt. % to 7 wt. % or in the range from 0.1 to 4 wt. %, in particular in a mixture a) of at least one aminosilane, such as e.g. bis-amino-silane or mono-amino-silane, with at least one alkoxysilane, such as e.g. trialkoxysilylpropyl-tetrasulfane, or b) one vinylsilane and one bis-silyl-aminosilane or one bis-silyl-polysulfursilane or one bis-silyl-aminosilane or c) one aminosilane and one multi-silyl-functional (= multifunctional) silane like e.g. bis-silyl-alkane or any of its corresponding silanols, siloxanes, polysiloxanes, their derivatives, their reaction products or any of their mixtures. In general, those silanes/silanols/siloxanes/polysiloxanes which have an alkyl group especially with a chain length in the range from 1 to 8 C atoms and which contain a functional group which is suitable for reaction with a polymer are preferred in particular.

The siloxane composition preferably contains at least one silicon compound chosen from the group consisting of:
3-glycidoxyalkyltrialkoxysilane,
3-methacryloxyalkyltrialkoxysilane,
3-(trialkoxysilyl)alkyl-succinic acid-silane,
aminoalkylaminoalkylalkyldialkoxysilane,
beta-(3,4-epoxycycloalkyl)alkyltrialkoxysilane,
(3,4-epoxycycloalkyl)alkyltrialkoxysilane,
bis(trialkoxysilylalkyl)amine,
bis(trialkoxysilyl)ethane,
(3,4-epoxyalkyl)trialkoxysilane,
gamma-aminoalkyltrialkoxysilane,
gamma-methacryloxyalkyltrialkoxysilane,
gamma-ureidoalkyltrialkoxysilane,
glycidoxyalkyltrialkoxysilane,
N-2-Aminoalkyl-3-aminoproplyltrialkoxysilane,
N-(3-trimalkoxysilyl)alkyl)alkylenediamine,
N-beta-(aminoalkyl)-gamma-aminoalkyltrialkoxysilane,
N-(gamma-trialkoxysilylalkyl)dialkylenetriamine,
polyaminoalkylalkyldialkoxysilane,
tris(3-trialkoxysilyl)alkyl)isocyanurate,
ueidopropyltrialkoxy)silane,
vinyltriacetoxysilane
and any of its corresponding silanols, siloxanes, their derivatives and reaction products.

The siloxane composition preferably contains at least one silicon compound chosen from the group consisting of:
3-aminopropyl)silanetriol,
3-glycidoxypropyltriethoxysilane,
3-glycidoxypropyltrimethoxysilane,
3-glycidyloxypropyltrialkoxysilane,
3-methacryloxypropyltriethoxysilane,
3-methacryloxypropyltrimethoxysilane,
3-(triethoxysilyl)propyl-succinic acid-silane,
aminoethylaminopropylmethyldiethoxysilane,
aminoethylaminopropylmethyldimethoxysilane,
aminopropyltrialkoxysilane,
beta-(3,4-epoxycyclohexyl)ethyltriethoxysilane,
beta-(3,4-epoxycyclohexyl)ethyltrimethoxysilane,
beta-(3,4-epoxycyclohexyl)methyltriethoxysilane,
beta-(3,4-epoxycyclohexyl)methyltrimethoxysilane,
bis-1,2-(triethoxysilyl)ethane,
bis-1,2-(trimethoxysilyl)ethane,
(3,4-epoxycyclohexyl)propyltriethoxysilane,
(3,4-epoxycyclohexyl)propyltrimethoxysilane,
bis(triethoxysilylpropyl)amine,
bis(trimethoxysilyl propyl)amine,
(3,4-epoxybutyl)triethoxysilane,
(3,4-epoxybutyl)trimethoxysilane,
gamma-aminopropyltriethoxysilane,
gamma-aminopropyltrimethoxysilane,
gamma-methacryloxypropyltriethoxysilane,
gamma-methacryloxypropyltrimethoxysilane,
gamma-ureidopropyltrialkoxysilane,
N-2-Aminoethyl-3-aminoproplyltriethoxysilane,
N-2-Aminoethyl-3-aminoproplyltrimethoxysilane,
N-2-Aminomethyl-3-aminoproplyltriethoxysilane,
N-2-Aminomethyl-3-aminoproplyltrimethoxysilane,
N-(3-(trimethoxysilyl)propyl)ethylenediamine,
N-beta-(aminoethyl)-gamma-aminopropyltriethoxysilane,
N-beta-(aminoethyl)-gamma-aminopropyltrimethoxysilane,
N-(gamma-triethoxysilylpropyl)diethylenetriamine,
N-(gamma-trimethoxysilylpropyl)diethylenetriamine,
N-(gamma-triethoxysilylpropyl)dimethylenetriamine,
N-(gamma-trimethoxysilylpropyl)dimethylenetriamine,
polyaminoalkylethyldialkoxysilane,
polyaminoalkylmethyldialkoxysilane,
tris(3-(triethoxysilyl)propyl) isocyanurate,
tris(3-(trimethoxysilyl)propyl) isocyanurate,
vinyltriacetoxysilane
and any of its corresponding silanols, siloxanes, polysiloxanes, their derivatives and reaction products.

According to the process of the invention, the siloxane compositions for the generation of the corrosion protecting coating(s) B, C or any combination of them are solutions or dispersions or at the same time solutions and dispersions that contain a content of at least one partially hydrolysed silane, of at least one totally hydrolysed silane, of at least one oligomeric siloxane, of at least one polymeric siloxane or of any mixture of these. More preferred, these compositions contain a content of at least one oligomeric siloxane and of at least one polymeric siloxane. If there is the need of a higher viscosity, there may be added at least one compound selected from the group of organic monomers, organic oligomers, organic polymers, at least one thickening agent like a fine-crystalline silicate like any clay or clay-like material like bentonite, fireclay, kaolinite and zeolithe, any borate, any oxide e.g. like nanocrystalline SiO₂, any organic substance or any mixture containing organic substance e.g. selected from the group of organic materials on the base of cellulose, (meth)acrylate, (poly)saccharide, starch, and polysiloxane.

According to the process of the invention, the siloxane compositions for the generation of the corrosion protecting coating(s) A, C or any combination of them are solutions or dispersions or at the same time solutions and dispersions that contain a content of at least one organosilicon compound having at least one group e.g. selected from amino groups, epoxy groups, glycidoxy groups, hydroxy groups, isocyanato groups, mercapto groups, (meth)acrylato groups, (poly)sulfur groups, thiol groups, ureido groups, vinyl groups and vinylbenzene groups and at least one multifunctional silicon compound having at least two silyl groups per molecule. More preferred, these compositions are aqueous solutions or dispersions showing a) a content of at least one organosilicon compound having at least one group e.g. selected from amino groups, epoxy groups, glycidoxy groups, hydroxy groups, isocyanato groups, mercapto groups, (meth)acrylato groups, (poly)sulfur groups, thiol groups, ureido groups, vinyl groups and vinylbenzene groups in a content in the range of 0.1 to 120 g/L, more preferred in the range of 0.12 or of 0.5 to 80 g/L, much more preferred in the range of 0.15 to 50 g/L or of 1 to 50 g/L or of 0.2 to 5 g/L or of 0.5 to 1.5 g/L, e.g. each of about 0.1, 0.2, 0.3, 0.4, 0.5, 0.6, 0.7, 0.8, 0.9, 1, 1.2, 1.4, 1.6, 1.8, 2, 2.5, 3, 4, 5, 6, 8, 10, 12, 14, 16, 18, 20, 22, 24, 26, 28, 30, 32, 34, 36, 38, 40, 42, 44, 46, 48, 50, 52, 54, 56, 58, 60, 62, 64, 66, 68, 70, 72, 74, 76, 78, 80, 82, 84, 86, 88, 90, 92, 94, 96, 98, 100, 102, 104, 106, 108, 110, 112, 114, 116 or 118 g/L, and b) a content of at least one multifunctional silicon compound having at least two silyl groups in the range of 0.1 to 120 g/L, more preferred in the range of 0.12 to 80 g/L or in the range of 0.5 to 80 g/L, much more preferred in the range of 0.15 to 50 g/L or of 1 to 50 g/L or of 0.2 to 5 g/L or of 0.5 to 1.5 g/L, e.g. each of about 0.1, 0.2, 0.3, 0.4, 0.5, 0.6, 0.7, 0.8, 0.9, 1, 1.2, 1.4, 1.6, 1.8, 2, 2.5, 3, 4, 5, 6, 8, 10, 12, 14, 16, 18, 20, 22, 24, 26, 28, 30, 32, 34, 36, 38, 40, 42, 44, 46, 48, 50, 52, 54, 56, 58, 60, 62, 64, 66, 68, 70, 72, 74, 76, 78, 80, 82, 84, 86, 88, 90, 92, 94, 96, 98, 100, 102, 104, 106, 108, 110, 112, 114, 116 or 118 g/L.

According to the process of the invention, the siloxane compositions for the generation of the corrosion protecting coating(s) A, C or any combination of them are solutions or dispersions that contain at least one silicon compound selected from silanes, silanols, siloxanes and polysiloxanes as well as a content of at least one organic compound that is an organic monomer, an organic oligomer, an organic polymer, an organic copolymer, an organic blockcopolymer or any mixture of these. More preferred, these compositions are aqueous solutions or dispersions showing a content of at least one organic material, especially in the range of 0.01 to 180 g/L or of 0.03 to 100 g/L, more preferred in the range of 0.05 to 60 g/L or of 0.08 to 30 g/L or of 0.1 to 15 g/L or of 0.2 to 5 g/L, e.g. each of about 0.1, 0.2, 0.3, 0.4, 0.5, 0.6, 0.7, 0.8, 0.9, 1, 1.2, 1.4, 1.6, 1.8, 2, 2.5, 3, 4, 6, 8, 10, 12, 14, 16, 18, 20, 22, 24, 26, 28, 30, 32, 34, 36, 38, 40, 42, 44, 46, 48, 50, 52, 54, 56, 58, 60, 62, 64, 66, 68, 70, 72, 74, 76, 78, 80, 82, 84, 86, 88, 90, 92, 94, 96, 98, 100, 102, 104, 106, 108, 110, 112, 114, 116, 120, 124, 128, 132, 136, 140, 144, 148, 152, 156, 160, 164, 168, 172 or 176 g/L. The weight ratio of the at least one organic compound to the at least one silane/silanol/siloxane/polysiloxane may be in the range from 0.001 : 1 to 4 : 1, preferably in the range from 0.05 : 1 to 2.5 : 1, more preferred in the range from 0.1 : 1 to 1.8 : 1, most preferred in the range from 0.2 : 1 to 1.5 : 1, especially in the range of about 0.3 : 1, about 0.4 : 1, about 0.5 : 1, about 0.6 : 1, about 0.7 : 1, about 0.8 : 1, about 0.9 : 1, about 1 : 1, about 1.1 : 1, about 1.2 : 1, about 1.3 : 1 or about 1.4 : 1. In some embodiments, there may be at least one fluoride, at least one complex fluoride or both be added to such mixtures. Further on, the organic film-forming agent to be used for the organic coating or the organic coating may in some cases preferably contain at least one component based on:
a) monomers, oligomers, polymers, copolymers, blockcopolymers or any of their mixtures, each being preferably based on:
   acryl, butadiene, epoxy, ethylene, melamine, methacryl, polycarbonate, polyester, polyether, polyurethane, styrene, vinyl or any mixture of these,
b) or based on copolymers, preferably of:
   acrylic-polyester-polyurethane copolymer,
   acryl ic-polyester-polyurethane-styrene copolymer,
   acrylic acid ester,
   acrylic acid ester-methacrylic acid ester, optionally with free acids or acrylonitrile,
   ethylene-acrylic mixture,
   ethylene-acrylic copolymer,
   ethylene-acrylic-polyester copolymer,
   ethylene-acrylic-polyurethane copolymer,
   ethylene-acrylic-polyester-polyurethane copolymer,
   ethylene-acrylic-polyester-polyurethane-styrene copolymer,
   ethylene-acrylic-styrene copolymer,
   polyester resins with free carboxyl groups combined with melamine-formaldehyde resins,
   a synthetic resin mixture or/and copolymer based on acrylate and styrene,
   a synthetic resin mixture or/and copolymer based on styrene-butadiene,
   a synthetic resin mixture or/and copolymer of acrylate and epoxide,
   based on an acrylic-modified polyester containing carboxyl groups together with melamine-formaldehyde and ethylene-acrylic copolymer,
   polycarbonate-polyurethane,
   polyester-polyurethane,
   styrene,
   styrene-vinyl acetate,
   vinyl acetate,
   vinyl ester,
   vinyl ether
or any mixture of these or on any mixture of a) and b).

According to the process of the invention, the siloxane compositions for the generation of the corrosion protecting coating(s) B, C or any combination of them are solutions or dispersions that contain at least one silicon compound selected from silanes and siloxanes as well as a content of at least one acid like acetic acid, glacial acetic acid, another carbonic acid, sulphuric acid, hydrochloric acid, nitric acid, fluoric acid, any phosphorus containing acid or any mixture of these. More preferred, these compositions are aqueous solutions or dispersions showing only a small content of at least one acid, most preferred in the range of 0.1 to 50 g/L, especially in the range of 0.15 to 30 g/L or of 0.2 to 10 g/L or of 0.5 to 5 g/L, e.g. each of about 0.1, 0.2, 0.3, 0.4, 0.5, 0.6, 0.7, 0.8, 0.9, 1, 1.2, 1.4, 1.6, 1.8, 2, 2.5, 3, 4, 6, 8, 10, 12, 16, 20, 24, 26, 28, 30, 32, 34, 36, 38, 40, 42, 44, 46 or 48 g/L or even no content of any acid. The content of acids may be added to the composition or may be produced by chemical reactions in the composition e.g. by the reaction of at least one silicon compound with water during hydrolysis.

According to the process of the invention, the siloxane compositions for the generation of the corrosion protecting coating(s) B, C or any combination of them are solutions or dispersions that contain at least one silicon compound selected from silanes and siloxanes as well as a content of at least one organic solvent like an alcohol like methanol, ethanol, propanol or any mixture of these. More preferred, these compositions are aqueous solutions or dispersions showing only a small content of at least one organic solvent, most preferred in the range of 0.1 to 200 g/L, especially in the range of 1 to 150 g/L or of 2 to 100 g/L or of 3 to 60 g/L or of 4 to 30 g/L or of 5 to 10 g/L, e.g. each of about 0.1, 0.2, 0.3, 0.4, 0.5, 0.6, 0.7, 0.8, 0.9, 1, 1.2, 1.4, 1.6, 1.8, 2, 2.5, 3, 4, 6, 8, 10, 12, 16, 20, 24, 28, 32, 36, 40, 44, 48, 52, 56, 60, 64, 68, 72, 76, 80, 84, 88, 92, 96, 100, 104, 108, 112, 116, 120, 124, 128, 132, 136, 140, 144 or 148 g/L or even no content of organic solvent.

According to the process of the invention, the siloxane compositions for the generation of the corrosion protecting coating(s) A, C or any combination of them are solutions or dispersions that contain at least one silicon compound selected from silanes, silanols, siloxanes and polysiloxanes as well as a content of at least one compound containing titanium, hafnium, zirconium, aluminium or boron or even any mixture of these. More preferred, there is an addition of at least one compound selected from compounds of complex fluorides or carbonates or nitrates or organic compounds of titanium, hafnium, zirconium, aluminium and boron or any mixture of these. Preferably, these compositions are aqueous solutions or dispersions showing a content of at least one compound containing titanium, hafnium, zirconium, aluminium or boron or even any mixture of these in the range of 0.01 to 100 g/L or of 0.03 to 70 g/L, more preferred in the range of 0.05 to 50 g/L or of 0.08 to 30 g/L or of 0.1 to 15 g/L or of 0.2 to 5 g/L, e.g. each of about 0.1, 0.2, 0.3, 0.4, 0.5, 0.6, 0.7, 0.8, 0.9, 1, 1.2, 1.4, 1.6, 1.8, 2, 2.5, 3, 4, 5, 6, 7, 8, 9, 10, 12, 14, 16, 18, 20, 22, 24, 26, 28, 30, 32, 34, 36, 38, 40, 42, 44, 46 or 48 g/L. The weight ratio of the silanes/silanols/siloxanes/polysiloxanes to the sum of compounds containing titanium, hafnium, zirconium, aluminium and boron may preferably be in the range from 0.01 : 1 to 6 : 1, preferably in the range from 0.05 : 1 to 4.5 : 1, more preferred in the range from 0.1 : 1 to 2.8 : 1, most preferred in the range from 0.2 : 1 to 2.5 : 1, especially in the range of about 0.3 : 1, about 0.4 : 1, about 0.5 : 1, about 0.6 : 1, about 0.7 : 1, about 0.8 : 1, about 0.9 : 1, about 1 : 1, about 1.1 : 1, about 1.2 : 1, about 1.3 : 1, about 1.4 : 1, about 1.5 : 1, about 1.6 : 1, about 1.7 : 1, about 1.8 : 1, about 1.9 : 1, about 2.0 : 1, about 2.1 : 1, about 2.2 : 1, about 2.3 : 1 or about 2.4 : 1. In some embodiments, there may be at least one fluoride, at least one complex fluoride or both be added to such mixtures.

According to the process of the invention, the siloxane composition for the generation of the corrosion protecting coating B is a solution or dispersion that contains at least one silicon compound selected from silanes, silanols and siloxanes as well as a content of at least one compound selected from compounds of complex fluorides or carbonates or nitrates or organic compounds of titanium, hafnium or zirconium or even any mixture of these. Preferably, this composition is an aqueous solution or a dispersion showing a content of at least one compound selected from compounds of complex fluorides or carbonates or nitrates or organic compounds of titanium, hafnium or zirconium or even any mixture of these in the range of 0.01 to 100 g/L or of 0.03 to 70 g/L, more preferred in the range of 0.05 to 50 g/L or of 0.08 to 30 g/L or of 0.1 to 15 g/L or of 0.2 to 5 g/L, e.g. each of about 0.1, 0.2, 0.3, 0.4, 0.5, 0.6, 0.7, 0.8, 0.9, 1, 1.2, 1.4, 1.6, 1.8, 2, 2.5, 3, 4, 5, 6, 7, 8, 9, 10, 12, 14, 16, 18, 20, 22, 24, 26, 28, 30, 32, 34, 36, 38, 40, 42, 44, 46 or 48 g/L. The weight ratio of the silanes/silanols/siloxanes to the sum of compounds containing titanium, hafnium and zirconium may preferably be in the range from 0.01 : 1 to 6 : 1, preferably in the range from 0.05 : 1 to 4.5 : 1, more preferred in the range from 0.1 : 1 to 2.8 : 1, most preferred in the range from 0.2 : 1 to 2.5 : 1, especially in the range of about 0.3 : 1, about 0.4 : 1, about 0.5 : 1, about 0.6 : 1, about 0.7 : 1, about 0.8 : 1, about 0.9 : 1, about 1 : 1, about 1.1 : 1, about 1.2 : 1, about 1.3 : 1, about 1.4 : 1, about 1.5 : 1, about 1.6 : 1, about 1.7 : 1, about 1.8 : 1, about 1.9 : 1, about 2.0 : 1, about 2.1 : 1, about 2.2 : 1, about 2.3 : 1 or about 2.4 : 1. In some embodiments, there may be at least one fluoride, at least one complex fluoride or both be added to such mixtures.

According to the process of the invention, the siloxane compositions for the generation of the corrosion protecting coating(s) B, C or any combination of them are solutions or dispersions that contain at least one silicon compound selected from silanes, silanols and siloxanes as well as a content of at least one additive selected from the group of particles with a grain size below one micron of all or of nearly all particles, surfactants like at least one non-ionic surfactant, dyes, fluorescing agents, biocides, pH adjusting agents, chelates, crosslinkers suitable for chemical crosslinking upon thermal influence, photoinitiators and substances for the generation of a gel. The particles may be inorganic particles or organic particles or both. These particles may be corrosion protection agents, electrically conductive, coloured or colour-free. The surfactants may aid in the improvement of the wettability and in the homogeneity of the generated thin film. The coloured particles, the dyes, the fluorescing agents or any mixture of these may help to increase the visibility of the generated thin film, which is typically not to be seen or is only be seen as a milky film or a film with a different glance or without any colouring with the naked eye or without any optical aids like UV light. The pH adjusting agents like any acid(s) or any basic substance like NH₃ solution may aid to lower or increase the pH. The biocides may help to suppress biological activity and further chemical variation which may negatively influence the performance of the compositions. The chelating agents may serve in particular to stabilize metallic compounds present in water. They are particularly suitable if they have only a low reactivity in the aqueous composition and if they are at least partly decomposed within the process conditions used and the metal ions for the bonding or chemical reaction are liberated. If they are too reactive, the organometallic compounds may react prematurely with other chemical compounds, such as silanes. Preferably, the chelates are hydrophilic, stable to hydrolysis, stable to water, form stable hydrolysates or show any mixture of these properties. Preferably, a silane or a chelate or both is/are chosen which is/are compatible with water and moreover in such cases together with an organic film-forming agent is chosen and which has the same properties as mentioned before for the silane or for the chelate. The crosslinkers for chemical networking by application of a higher temperature, often in the range from 80 to 300 °C, like compounds on the base of isocyanate, isocyanurate, melamine or any mixture of them, help to generate a denser network by chemical reaction at higher temperature. The photoinitiators may help to generate denser networks with the aid of radical polymerisation if there are adequate monomers, oligomers, polymers, copolymers, blockcopolymers or any of their mixtures present. More preferred, these compositions are aqueous solutions or dispersions showing a content of at least one type of additive of the group mentioned above in the range of 0.01 to 150 g/L for each additive type as mentioned in the group above, more preferred in the range of 0.5 to 120 g/L or of 1 to 90 g/L or of 1.5 to 60 or of 2 to 30 g/L or of 5 to 10 g/L each, e.g. each of about 0.1, 0.2, 0.3, 0.4, 0.5, 0.6, 0.7, 0.8, 0.9, 1, 1.2, 1.4, 1.6, 1.8, 2, 2.5, 3, 4, 6, 8, 10, 12, 14, 16, 18, 20, 22, 24, 26, 28, 30, 32, 34, 36, 38, 40, 42, 44, 46, 48, 50, 52, 54, 56, 58, 60, 62, 64, 66, 68, 70, 72, 74, 76, 78, 80, 82, 84, 86, 88, 90, 92, 94, 96, 98, 100, 102, 104, 106, 108, 110, 112, 114, 116 or 118 g/L each. The composition B is preferably chromium-free.

The at least one metal chelate is preferably chosen from chelate complexes based on acetylacetonates, acetoacetates, acetonates, alkylenediamines, amines, lactates, mono-carboxylic acids, bis-carboxylic acids, citrates, glycols or any of their mixtures. The at least one metal chelate is preferably based on:
acetylacetonate,
acetoacetate,
di-n-alkoxy-bisalkyl acetoacetate,
hydroxyalkylenediamine triacetate,
trialkanolamine,
trialkylenetetramine alkali metal lactate,
alkanolamine,
alkyl acetatoacetate,
alkylenediamine tetraacetate,
ammonium lactate,
citrate,
dialkyl citrate,
dialkyl ester-citrate,
dialkylenetriamine,
diisoalkoxybisalkyl acetoacetate,
diisopropoxybisalkyl
or any mixture of these.

According to the process of the invention, the siloxane compositions for the generation of the corrosion protecting coating(s) B, C or any combination of these are solutions or dispersions that contain at least one silicon compound selected from silanes, silanols and siloxanes as well as a content of at least one nitrogen containing agent like nitrate, nitrite or a guanidine compound like nitroguanidine. Such nitrogen containing agent may contain at least one nitrogen containing group or may release such groups. More preferred, these compositions are aqueous solutions or dispersions showing a content of at least one agent in the range of 0.01 to 60 g/L, more preferred in the range of 0.05 to 40 g/L or of 0.1 to 20 g/L or of 0.2 to 10 g/L or of 0.5 to 5 g/L, e.g. each of about 0.1, 0.2, 0.3, 0.4, 0.5, 0.6, 0.7, 0.8, 0.9, 1, 1.2, 1.4, 1.6, 1.8, 2, 2.5, 3, 4, 6, 8, 10, 12, 14, 16, 18, 20, 22, 24, 26, 28, 30, 32, 34, 36 or 38 g/L.

According to the process of the invention, the siloxane compositions for the generation of the corrosion protecting coating(s) B, C or any combination of them are solutions or dispersions that contain at least one silicon compound selected from silanes, silanols and siloxanes that has at least one functional group selected from the group consisting of amino, epoxy, glycidoxy, isocyanato, mercapto, (meth)acrylato, (poly)sulfur, ureido, vinyl and vinylbenzene.

The tool suitable for applying a process according to the invention contains and dispenses a composition which is a solution or dispersion containing at least one silicon compound selected from silanes, silanols and siloxanes. More preferred, the tool contains a composition which contains predominantly at least one silicon compound.

The tool suitable for applying a process according to the invention is a spray can, a spray instrument or a stick having a storage chamber containing a composition which is a solution or dispersion containing at least one silicon compound selected from silanes, silanols and siloxanes. More preferred, the tool contains a composition which contains predominantly at least one silicon compound.

The tool suitable for applying a process according to the invention contains a paste which is a composition containing at least one silicon compound selected from silanes, silanols and siloxanes and whereby the tool transmits or releases a portion of the paste when it is brought into contact with the surface to be coated. More preferred, the tool contains a composition which contains predominantly at least one silicon compound.

Such tools may contain the siloxane composition in a concentration adequate for the coating of the removal area Z. Preferably, this concentration is adequate to generate a wet film and dry film of adequate wet film thickness and of adequate dry film thickness. The required corrosion protection and adhesion may be gained during drying or during drying and crosslinking or during drying and chemical reacting.

With the process of the invention, it is possible to use the following repair process successions:
A) First, the siloxane composition is applied onto the removal area Z at least partially. Then, a coating C may be applied more or less in the region of the removal area Z with a composition like a repair primer or a surface primer or a further siloxane composition or any mixture between an organic and a siloxane composition. It may be sometimes necessary to level this area coated with the coating C e.g. by grinding or lapping, especially so that there are no edges to be seen at the boarder of these coatings, even perhaps under a further paint coating. It was found that such a system with a primer as coating C shows an astonishingly high corrosion resistance and a better paint adhesion than the system as typically used without any siloxane composition.
B) Alternatively, first, the siloxane composition was applied onto the removal area Z at least partially. Then, no coating C like a repair primer or a surface primer was used in the region of the removal area Z. Instead of this, a further coating was applied all over the metallic sheet resp. part, covering in the repair zone even the coating B prepared with the siloxane composition. Then, there is the possibility, but no necessity, to equalize the depth generated in the removal area Z as mentioned just above under A) e.g. by applying a greater coating thickness of this coating which may be applied e.g. by a base-coat or a clear-coat or a combination of these. This has the advantage, to save the process step of applying the repair primer resp. surface primer and even to level this area e.g. by grinding or lapping. Nevertheless, the corrosion resistance of this multilayer system seems to be a bit better than the normal unrepaired paint system just beneath. For the repair of coated metallic material e.g. of constructions like bridges, furniture, devices and equipment, in the repaired areas the primer coatings C and perhaps even a next primer coating may be thinner than normal so that costs could be further reduced.

It was surprising that it was possible - e.g. only by spraying or with an easy tool like a sponge or a cushion filled with the siloxane composition - to apply a siloxane composition to generate a thin film B without any practical problems and without any loss of coating quality although there was a manual application which handling was only partially controlled. Even for an application of an aqueous siloxane containing solution by manual handling, where an inhomogeneous or partially insufficient thick coating may perhaps occur, no problem occurred showing indications for a non-coated and therefore not corrosion-protected area or for too thin or too thick coated areas. Therefore, it looks like that even for the manual handling of a tool no situation does occur easily where there remain insufficiently protected areas of the coating B. This means that the manual application process seems to be a robust process.

It was further surprising that a process may be developed which may be - especially during car body preparation in car production - applied in-line. Up to now, a repair of painted car bodies with at least one repair area per car body, which is necessary for a certain, sometimes even very high percentage of car bodies, is typically carried out by separating such car bodies and repair them in separate areas. Due to the possibility of an easier and quicker application of the siloxane composition than of the actually used coatings, the repair process may proceed immediately and in-line.

Additionally, it was surprising that a siloxane composition according to the invention shows a good corrosion resistance and paint adhesion when this composition is applied without a prior cleaning step and without applying as a further coating an e-coat, a repair primer, another type of primer or paint or any combination of these, for example in at least two coatings. This result was as outstanding, as at least one coating B was applied with the aid of a siloxane composition that typically allows the generation of a dry film thickness in the range from 0.01 to 0.1 µm of the coating B and as e.g. the corrosion resistance is strongly a function of the coating thickness. Typically, a single primer or paint coating shows a dry film thickness in the range from 10 to 50 µm. Typically, the paint system as multiplayer of mostly at least three coatings one above the other of at least one primer or e-coat and of at least one paint has a thickness in the dry state in the range from 30 to 150 µm. For such dry film thicknesses, it is no problem to generate a good corrosion resistance.

### SPECIFIC EXAMPLES AND COMPARISON EXAMPLES

The following sections describe specific examples and comparison examples with the target to show some of the possible process varieties, composition varieties and the effects related thereto more in detail and not to limit the invention.

### Section 1: Preparation of the coated metal sheets and application of the repair coating B

For each test, fifteen metal sheets from hot-dip-galvanised steel were taken having a zinc phosphate coating and an e-coat electrocoated on the zinc phosphate coating. The thickness of the zinc phosphate coating was about 6 µm, the thickness of the e-coat was about 20 µm. In the middle of each such coated metal sheet, these coatings were sanded so that the blank metal sheet was to be seen there in the middle of the sheet, of which a thin metal surface has been removed by sanding, too. Then, immediately after sanding, a clean wipe releasing no fibers and no pieces of fluff was impregnated with pure water so that is was wet. This wet clean wipe was used to wipe along the whole removal areas Z to clean them thoroughly from dust and from further fine parts that remained from the sanding. Then these areas were dried with a further clean wipe so that there was no or only a very thin water film remaining. Then, immediately after cleaning, the siloxane composition was applied to the removal areas Z to generate a coating B on the freshly prepared and clean removal areas.

Then in Test 1, this metallic surface as well as small rims of it were coated with an aqueous siloxane composition of a mixture of silanes/silanols/siloxanes with a high content of amino groups and of titanium hexafluoride in a weight ratio of 1 : 3. This siloxane composition was sprayed on to the center of the removal area Z in such way that there was generated a dry film on the whole blank metallic surface as well as on a small neighbouring rim of the coated area where the coating B was reduced in thickness by sanding. These parts of the removal area Z, but not all of the sanded parts of the removal area Z, were coated with this coating B. There was no thin film B sprayed on to non-sanded parts outside the removal area Z. The generated coatings B were totally and obviously homogeneously coated with a dry film thickness of about 25 to about 80 µm thickness depending on and proportional to the concentration of all these additions together in water of 5, 10 resp. 15 % by weight. It was further taken care that there did not occur any drops of the silane/silanol/siloxane containing aqueous solution and that the wet film of the siloxane composition was in about homogeneously and of in about equal thickness. This wet thin film B was dried by hot air at 80 °C for 5 minutes to generate a coating B. Then the corrosion resistance as well as the paint adhesion was tested.

In Test 2, the same procedure was undertaken, but additionally, in the siloxane coated removal area Z a repair primer with a thickness of about 20 µm was applied, dried and heated to the temperature of crosslinking. Then, the area of the repair primer was finely grinded to remove thickness differences at its rims. Finally, a clear-coat was applied and thermally crosslinked. Then the corrosion resistance as well as the paint adhesion was tested.

In the Tests 3 and 4, the same procedures as in the Tests 1 and 2 were used, but with the difference, that as aqueous siloxane composition an aqueous silane/silanol/siloxane composition was applied containing a mixture of alkoxysilanes/alkoxysilanols/alkoxysiloxanes having amino groups and a mixture of silanes/silanols/siloxanes having predominantly two silyl groups in a weight ratio of 1 : 1. The results of the VDA test after 10 respectively 20 cycles with 5 days per cycle were astonishingly excellent (data for the creepage from the scribe in mm).

In the further tests, the same procedures as in the Tests 3 and 4 were used, but with the difference, that compositions according to Table 1, B 3, B 4, VB 5, VB 6 and B 7 were applied, that e-zinc coated and phosphated steel panels for automotive applications were used, that a cushion filled with the siloxane composition B was used which could transmit to the surface to be coated through one side of the cushion and that a complete automobile paint system was applied over the whole surface of the phosphated, e-zinc coated panels which were sanded in the area Z and then coated with the composition B in the area Z, before the complete paint system was applied. The results of the VDA cycle test were compared with results of similar panels having a typical high quality automobile ZnMnNi phosphating, having been then postrinsed with a zirconium fluoride containing solution (both coatings instead of one coating B according to the invention) and finally coated with the same complete automobile paint system.

**Table 1: Compositions of the different aqueous solutions B for the silane/siloxane coating according to the invention, on e-zinc coated steel sheets of automobile steel quality sanded down to the steel**

| Content in g/L | B 1 - Test 2 | VB 2 - Test 4 | B 3 | B 4 | VB 5 | VB 6 | B 7 | Phosphating |
|---|---|---|---|---|---|---|---|---|
| Aminosilane 1 | 0.8 | 0.5 | 5.0 | 0.2 | | 0.4 | 0.4 | |
| Aminosilane 2 | | | | | 0.2 | | | |
| Bis-silyl-silane 1 | | 1.0 | | | | 0.8 | 0.8 | |
| H₂TiF₆ as Ti | 0.4 | | 0.5 | | | | 0.4 | |
| H₂ZrF₆ as Zr | | | | 0.2 | | | | |
| F⁻ calculated | | | 1.2 | 0.48 | | | | |
| Acetic acid | | 0.15 | | | | | | |
| Ethyl alcohol | | 1.5 | | | | | | |
| Organic polymer | | | | | | 0.5 | 0.5 | |
| pH | 3.5 | 6 | 4.2 | 4.2 | 10 | 5.5 | 4 | |
| ZnMnNi phosphating, H₂ZrF₆ postrinsing | | | | | | | | x |

**Table 2: Results of VDA 621-415 tests for the coatings prepared with the compositions of Table 1 after application of paint coatings C**

| Content in g/L | B 1 - Test 2 | B 1 - Test 2 | VB 2 - Test 4 | VB 2 - Test 4 | B 3 | B 4 | VB 5 | Phosphating |
|---|---|---|---|---|---|---|---|---|
| VDA salt spray test | U<1-1 | U1.5-1.8 | U<1-1 | U1.5-1.8 | U1-1.3 | U1-1.3 | U1-1.3 | U1.5 |
| No. of VDA cycles | 10 | 20 | 10 | 20 | 2 | 2 | 2 | 10 |
| Total paint thickness of later applied paints, µm | 170 | 170 | 170 | 170 | 123 | 123 | 123 | 125 |

All the VDA results for panels treated according to the invention are significantly better than such without the silane/siloxane coating.

## Claims

1. A process for producing a repair coating on at least one metallic surface that is coated with at least one corrosion protection coating A applied with at least one composition selected from the group of
A1) pretreatment compositions like activating compositions, passivating compositions, phosphating compositions, titanium compound(s) or zirconium compound(s) or both of them containing compositions and after-rinse-compositions,
A2) organic compositions like primers, wet-primers, welding primers, e-coats, powder coats, base-coats and clear-coats and of
A3) silicon compound(s) containing compositions that are solutions or dispersions containing at least one silicon compound selected from silanes, silanols, siloxanes and polysiloxanes and,
whereby the at least one corrosion protection coating A has been at least partially removed in the area Z by grinding, sanding, sandblasting or paint stripping or any combination of them,
whereby a thin corrosion protection coating B containing at least one silicon compound is applied with a solution, dispersion or paste (= "siloxane composition") containing at least one silane, at least one silanol, at least one siloxane or any mixture of these on at least a part of the area Z
a) by spraying or
b) by contacting a tool that contains and dispenses the siloxane composition which is a solution or dispersion containing at least one silicon compound selected from silanes, silanols and siloxanes or
c) by using a tool with a storage chamber having a membrane or another porous material with the ability to transmit the siloxane composition from the storage chamber to the working surface of the tool or
d) by contacting with a tool that transmits or relieves a portion of a paste which is a composition containing at least one silicon compound selected from silanes, silanols and siloxanes when it is brought into contact with the surface to be coated,
whereby the siloxane composition is a solution or dispersion that contains at least one silicon compound selected from silanes, silanols and siloxanes as well as a content of at least one compound selected from compounds of complex fluorides or carbonates or nitrates or organic compounds of titanium, hafnium or zirconium or even any mixture of these.

2. The process according to claim 1, whereby a thin film B of the siloxane composition is applied which is without particles, fibres, pieces of fluff and other materials generating flaws having a diameter or thickness of not more than 10 µm.

3. The process according to claim 1, whereby a thin film B of the siloxane composition is applied which has a wet film thickness in the range from 0.005 to 40 µm.

4. The process according to claim 1, whereby a thin film B of the siloxane composition is applied which has a dry film thickness in the range from 0.001 to 3 µm.

5. The process according to claim 1, whereby a thin film B of the siloxane composition is applied and the thin film is then dried, e.g. at a temperature in the range from 5 to 300 °C.

6. The process according to claim 1, whereby a thin film B is applied with the siloxane composition and dried by self-drying e.g. at room temperature, by heating the coated metallic substrate, by heating with hot air, by blowing or heating with a hot gas stream or by any combination of these.

7. The process according to claim 1, whereby a thin film B of the siloxane composition is applied by spraying the siloxane composition with a spray can.

8. The process according to claim 1, whereby a thin film B of the siloxane composition is applied by using a tool like a brush, like a sponge, like a tampon, like a stick or like a gel-pack.

9. The process according to claim 1, whereby the siloxane composition has a viscosity in the range from 1 to 250 mPa·s measured at 20 °C.

10. The process according to claim 1, whereby the siloxane composition is applied to at least one metallic surface of iron, steel, zinc-coated or zinc-alloy-coated steel, aluminium, aluminium alloy, magnesium alloy, titanium, titanium alloy or to any mixture of these.

11. The process according to claim 1, whereby the siloxane composition is applied to at least one surface of at least one part showing at least two different materials at its surface(s), being made of at least one metallic material, of at least one plastics material like a foil, multilayer, sheet or component of plastics material, of at least one glass material, of at least one ceramic material, of at least one wooden material or of any mixture of these.

12. The process according to claim 1, whereby the siloxane composition is applied to at least one metallic surface of at least one sheet, to at least one complex formed part, to at least one massive part or any mixture of these.

13. The process according to claim 1, whereby the siloxane composition is applied to at least one metallic surface of a coil, of metallic sheet, of a car body, of parts of a car, of a body of an aerospace, of a ship, of offshore-equipment, of a railcar or of any parts of them, of parts or composed parts for construction, furniture, devices or equipment - either during production or after damage or after long-term use.

14. The process according to claim 1, whereby at least one corrosion protection coating C is applied upon the thin film B whereby the coating C is generated with an organic composition like a primer, a wet-primer, an e-coat, a powder coat, a base-coat or a clear-coat or with a coating with the same or with another siloxane composition as for the thin film B or with a succession of applications of such compositions, whereby at least one coating C may optionally be applied on a great portion or on the total surface of the coated metallic part.

15. The process according to claim 1, whereby the siloxane composition for the generation of the corrosion protecting coating(s) C are solutions or dispersions that contain at least one silicon compound selected from the group of silanes, silanols and siloxane.

16. The process according to claim 1, whereby the siloxane compositions for the generation of the corrosion protecting coating(s) B, C or any combination of them are solutions or dispersions that contain a content of at least one partially hydrolysed silane, of at least one totally hydrolysed silane, of at least one oligomeric siloxane, of at least one polymeric siloxane or of any mixture of these.

17. The process according to claim 1, whereby the siloxane compositions for the generation of the corrosion protecting coating(s) B, C or any combination of them are solutions or dispersions that contain at least one silicon compound selected from silanes and siloxanes as well as a content of at least one acid like acetic acid, glacial acetic acid, another carbonic acid, sulphuric acid, hydrochloric acid, nitric acid, fluoric acid, any phosphorus containing acid or any mixture of these.

18. The process according to claim 1, whereby the siloxane compositions for the generation of the corrosion protecting coating(s) B, C or any combination of them are solutions or dispersions that contain at least one silicon compound selected from silanes and siloxanes as well as a content of at least one organic solvent like an alcohol like methanol, ethanol, propanol or any mixture of these.

19. The process according to claim 1, whereby the siloxane compositions for the generation of the corrosion protecting coating(s) B, C or any combination of them are solutions or dispersions that contain at least one silicon compound selected from silanes, silanols and siloxanes as well as a content of at least one additive selected from the group of particles with a grain size below one micron, surfactants, dyes, fluorescing agents, biocides, pH adjusting agents, chelates, crosslinkers suitable for chemical crosslinking upon thermal influence, photoinitiators and substances for the generation of a gel.

20. The process according to claim 1, whereby the siloxane compositions for the generation of the corrosion protecting coating(s) B or C are solutions or dispersions that contain at least one silicon compound selected from silanes, silanols and siloxanes as well as a content of at least one nitrogen containing agent like nitrate, nitrite or a guanidine compound.

21. The process according to claim 1, whereby the siloxane compositions for the generation of the corrosion protecting coating(s) B, C or any combination of them are solutions or dispersions that contain at least one silicon compound selected from silanes, silanols and siloxanes that has at least one functional group selected from the group consisting of amino, epoxy, glycidoxy, isocyanato, mercapto, (meth)acrylato, (poly)sulfur, ureido, vinyl and vinylbenzene.

## Patentansprüche

1. Verfahren zur Herstellung einer Reparaturbeschichtung auf mindestens einer metallischen Oberfläche, die mit mindestens einer Korrosionsschutzbeschichtung A beschichtet ist, die mit mindestens einer Zusammensetzung aufgebracht worden ist, die ausgewählt ist aus der Gruppe von
A1) Vorbehandlungszusammensetzungen, wie Aktivierungszusammensetzungen, Passivierungszusammensetzungen, Phosphatierungszusammensetzungen, Titanverbindung(en) oder Zirconiumverbindung(en) oder beide davon enthaltenden Zusammensetzungen und Nachspülzusammensetzungen,
A2) organischen Zusammensetzungen, wie Grundierungen, Nassgrundierungen, Schweißgrundierungen, E-Beschichtungen, Pulverbeschichtungen, Basislacken und Klarlacken, und
A3) Siliciumverbindung(en) enthaltenden Zusammensetzungen, die Lösungen oder Dispersionen sind, die mindestens eine Siliciumverbindung ausgewählt aus Silanen, Silanolen, Siloxanen und Polysiloxanen enthalten, und
wobei die mindestens eine Korrosionsschutzbeschichtung A in dem Bereich Z durch Schmirgeln, Schleifen, Sandstrahlen oder Abbeizen oder jedwede Kombination davon mindestens teilweise entfernt worden ist,
wobei eine dünne Korrosionsschutzbeschichtung B, die mindestens eine Siliciumverbindung enthält, mit einer Lösung, Dispersion oder Paste (="Siloxanzusammensetzung"), die mindestens ein Silan, mindestens ein Silanol, mindestens ein Siloxan oder jedwede Mischung von diesen enthält, auf mindestens einen Teil des Bereichs Z aufgebracht wird
a) durch Sprühen oder
b) durch Kontaktieren mit einem Werkzeug, welches die Siloxanzusammensetzung enthält und ausgibt, welche eine Lösung oder Dispersion ist, die mindestens eine Siliciumverbindung ausgewählt aus Silanen, Silanolen und Siloxanen enthält, oder
c) durch Verwenden eines Werkzeugs mit einer Vorratskammer, die eine Membran oder anderes poröses Material aufweist, mit der Fähigkeit, die Siloxanzusammensetzung aus der Vorratskammer auf die Arbeitsoberfläche des Werkzeugs zu übertragen, oder
d) durch Kontaktieren mit einem Werkzeug, welches einen Anteil einer Paste überträgt oder abgibt, die eine Zusammensetzung ist, die mindestens eine Siliciumverbindung ausgewählt aus Silanen, Silanolen und Siloxanen enthält, wenn sie in Kontakt mit der zu beschichtenden Oberfläche gebracht wird,
wobei die Siloxanzusammensetzung eine Lösung oder Dispersion ist, die mindestens eine Siliciumverbindung ausgewählt aus Silanen, Silanolen und Siloxanen enthält, sowie einen Gehalt an mindestens einer Verbindung ausgewählt aus Verbindungen von komplexen Fluoriden oder Carbonaten oder Nitraten oder organischen Verbindungen von Titan, Hafnium oder Zirconium oder sogar jedweder Mischung von diesen enthält.

2. Verfahren nach Anspruch 1, wobei ein dünner Film B aus der Siloxanzusammensetzung aufgebracht wird, der ohne Partikel, Fasern, Flaumstücke oder sonstige Materialien ist, die Mängel mit einem Durchmesser oder einer Dicke von nicht mehr als 10 µm erzeugen könnten.

3. Verfahren nach Anspruch 1, wobei ein dünner Film B aus der Siloxanzusammensetzung aufgebracht wird, der eine Nassfilmdicke im Bereich von 0,005 bis 40 µm aufweist.

4. Verfahren nach Anspruch 1, wobei ein dünner Film B aus der Siloxanzusammensetzung aufgebracht wird, der eine Trockenfilmdicke im Bereich von 0,001 bis 3 µm aufweist.

5. Verfahren nach Anspruch 1, wobei ein dünner Film B aus der Siloxanzusammensetzung aufgebracht wird und der dünne Film dann getrocknet wird, z. B. bei einer Temperatur im Bereich von 5 bis 300 °C.

6. Verfahren nach Anspruch 1, wobei ein dünner Film B mit der Siloxanzusammensetzung aufgebracht wird und durch Selbsttrocknung, z. B. bei Raumtemperatur, durch Erwärmen des beschichteten metallischen Substrats, durch Erwärmen mit heißer Luft, durch Blasen oder Erwärmen mit einem heißen Gasstrom oder durch jedwede Kombination von diesen getrocknet wird.

7. Verfahren nach Anspruch 1, wobei ein dünner Film B aus der Siloxanzusammensetzung durch Sprühen der Siloxanzusammensetzung mit einer Sprühdose aufgebracht wird.

8. Verfahren nach Anspruch 1, wobei ein dünner Film B der Siloxanzusammensetzung unter Verwendung eines Werkzeugs wie eines Pinsels, eines Schwamms, eines Tampons, eines Stifts oder eines Gelpacks aufgebracht wird.

9. Verfahren nach Anspruch 1, wobei die Siloxanzusammensetzung eine Viskosität im Bereich von 1 bis 250 mPa·s aufweist, gemessen bei 20 °C.

10. Verfahren nach Anspruch 1, wobei die Siloxanzusammensetzung auf mindestens eine metallische Oberfläche von Eisen, Stahl, mit Zink beschichtetem oder mit Zinklegierung beschichtetem Stahl, Aluminium, Aluminiumlegierung, Magnesiumlegierung, Titan, Titanlegierung oder jedweder Mischung von diesen aufgebracht wird.

11. Verfahren nach Anspruch 1, wobei die Siloxanzusammensetzung auf mindestens eine Oberfläche von mindestens einem Teil aufgebracht wird, das an seiner Oberfläche bzw. seinen Oberflächen mindestens zwei unterschiedliche Materialien zeigt, die aus mindestens einem metallischen Material, mindestens einem Kunststoffmaterial wie Folie, Mehrfachschicht, Lage oder Komponente von Kunststoffmaterial, aus mindestens einem Glasmaterial, mindestens einem Keramikmaterial, mindestens einem Holzmaterial oder jedweder Mischung von diesen gefertigt sind.

12. Verfahren nach Anspruch 1, wobei die Siloxanzusammensetzung auf mindestens eine metallische Oberfläche von mindestens einer Lage, auf mindestens ein komplex gebildetes Teil, auf mindestens ein massives Teil oder jedwede Mischung davon aufgebracht wird.

13. Verfahren nach Anspruch 1, wobei die Siloxanzusammensetzung auf mindestens eine metallische Oberfläche einer Spule, einer Metalllage, einer Kraftfahrzeugkarosserie, auf Teile eines Kraftfahrzeugs, auf eine Karosserie eines Raumfahrzeugs, eines Schiffes, von Offshore-Ausrüstung, eines Triebwagens oder jedweden Teilen davon, von Teilen oder zusammengesetzten Teilen zur Konstruktion, Möbelstücken, Vorrichtungen oder Ausrüstung entweder während der Herstellung oder nach Beschädigung oder langfristigem Gebrauch aufgebracht wird.

14. Verfahren nach Anspruch 1, wobei mindestens eine Korrosionsschutzbeschichtung C auf den dünnen Film B aufgebracht wird, wobei die Beschichtung C mit einer organischen Zusammensetzung, wie einer Grundierung, einer Nassgrundierung, einer E-Beschichtung, einer Pulverbeschichtung, einem Basislack oder Klarlack, oder mit einer Beschichtung mit der gleichen oder mit einer anderen Siloxanzusammensetzung wie für den dünnen Film B erzeugt wird, oder mit aufeinander folgenden Aufbringungen solcher Zusammensetzungen erzeugt wird, wobei mindestens eine Beschichtung C gegebenenfalls auf einen großen Anteil oder auf die Gesamtoberfläche des beschichteten metallischen Teils aufgebracht werden kann.

15. Verfahren nach Anspruch 1, wobei die Siloxanzusammensetzung zur Erzeugung der korrosionsschützenden Beschichtung(en) C Lösungen oder Dispersionen ist, die mindestens eine Siliciumverbindung ausgewählt aus der Gruppe von Silanen, Silanolen und Siloxan enthalten.

16. Verfahren nach Anspruch 1, wobei die Siloxanzusammensetzungen zur Erzeugung der korrosionsschützenden Beschichtung(en) B, C oder jedweder Kombination davon Lösungen oder Dispersionen sind, die einen Gehalt an mindestens einem teilweise hydrolysierten Silan, von mindestens einem vollständig hydrolysierten Silan, von mindestens einem oligomeren Siloxan, von mindestens einem polymeren Siloxan oder jedweder Mischung von diesen enthalten.

17. Verfahren nach Anspruch 1, wobei die Siloxanzusammensetzungen zur Erzeugung der korrosionsschützenden Beschichtung(en) B, C oder jedweder Kombination davon Lösungen oder Dispersionen sind, die mindestens eine Siliciumverbindung ausgewählt aus Silanen und Siloxanen enthalten, sowie einen Gehalt an mindestens einer Säure, wie Essigsäure, Eisessig, einer weiteren Kohlensäure, Schwefelsäure, Salzsäure, Salpetersäure, Flusssäure, jedweder phosphorhaltigen Säure oder jedweder Mischung von diesen enthalten.

18. Verfahren nach Anspruch 1, wobei die Siloxanzusammensetzungen zur Erzeugung der korrosionsschützenden Beschichtung(en) B, C oder jedweder Kombination davon Lösungen oder Dispersionen sind, die mindestens eine Siliciumverbindung ausgewählt aus Silanen und Siloxanen enthalten, sowie einen Gehalt an mindestens einem organischen Lösungsmittel, wie einem Alkohol, wie Methanol, Ethanol, Propanol, oder jedweder Mischung von diesen enthalten.

19. Verfahren nach Anspruch 1, wobei die Siloxanzusammensetzungen zur Erzeugung der korrosionsschützenden Beschichtung(en) B, C oder jedweder Kombination von diesen Lösungen oder Dispersionen sind, die mindestens eine Siliciumverbindung ausgewählt aus Silanen, Silanolen und Siloxanen enthalten, sowie einen Gehalt an mindestens einem Additiv ausgewählt aus der Gruppe von Partikeln mit einer Korngröße unter einem Mikrometer, Tensiden, Farbstoffen, Fluoreszierungsmitteln, Bioziden, pH-Einstellmitteln, Chelaten, Vernetzungsmitteln, die für chemische Vernetzung unter thermischem Einfluss geeignet sind, Photoinitiatoren und Substanzen zur Erzeugung eines Gels enthalten.

20. Verfahren nach Anspruch 1, wobei die Siloxanzusammensetzungen zur Erzeugung der korrosionsschützenden Beschichtung(en) B oder C Lösungen oder Dispersionen sind, die mindestens eine Siliciumverbindung ausgewählt aus Silanen, Silanolen und Siloxanen enthalten, sowie einen Gehalt an mindestens einem stickstoffhaltigen Mittel, wie Nitrat, Nitrit oder einer Guanidinverbindung enthalten.

21. Verfahren nach Anspruch 1, wobei die Siloxanzusammensetzungen zur Erzeugung der korrosionsschützenden Beschichtung(en) B, C oder jedweder Kombination davon Lösungen oder Dispersionen sind, die mindestens eine Siliciumverbindung ausgewählt aus Silanen, Silanolen und Siloxanen enthalten, die mindestens eine funktionale Gruppe ausgewählt aus der Gruppe bestehend aus Amino, Epoxy, Glycidoxy, Isocyanato, Mercapto, (Meth)acrylato, (Poly)schwefel, Ureido, Vinyl und Vinylbenzol aufweist.

## Revendications

1. Procédé de production d'un revêtement de réparation sur au moins une surface métallique qui est revêtue d'au moins un revêtement de protection contre la corrosion A appliqué avec au moins une composition choisie dans le groupe constitué par
A1) des compositions de prétraitement telles que des compositions d'activation, des compositions de passivation, des compositions de phosphatation, un ou plusieurs composés de titane ou un ou plusieurs composés de zirconium ou les deux contenant des compositions et des compositions après rinçage,
A2) des compositions organiques telles que des apprêts, des apprêts humides, des apprêts de soudage, des revêtements électrostatiques, des revêtements pulvérulents, des revêtements de base et des revêtements transparents et par
A3) un ou plusieurs composés de silicium contenant des compositions qui sont des solutions ou des dispersions contenant au moins un composé de silicium choisi entre les silanes, les silanols, les siloxanes et les polysiloxanes et,
moyennant quoi l'au moins un revêtement de protection contre la corrosion A a été au moins partiellement retiré de la zone Z par meulage, ponçage, sablage ou décapage ou une combinaison quelconque de ceux-ci,
moyennant quoi un mince revêtement de protection contre la corrosion B contenant au moins un composé de silicium est appliqué avec une solution, une dispersion ou une pâte (= « composition siloxane ») contenant au moins un silane, au moins un silanol, au moins un siloxane ou un mélange quelconque de ceux-ci sur au moins une partie de la zone Z
a) par pulvérisation ou
b) par mise en contact d'un outil qui contient et distribue la composition siloxane qui est une solution ou une dispersion contenant au moins un composé de silicium choisi entre les silanes, les silanols et les siloxanes ou
c) par utilisation d'un outil doté d'une chambre de stockage possédant une membrane ou un autre matériau poreux ayant la capacité de transmettre la composition siloxane depuis la chambre de stockage vers la surface de travail de l'outil ou
d) en établissant un contact avec un outil qui transmet ou libère une partie d'une pâte qui est une composition contenant au moins un composé de silicium choisi entre les silanes, les silanols et les siloxanes lorsqu'il est amené en contact avec la surface devant être revêtue,
moyennant quoi la composition siloxane est une solution ou une dispersion qui contient au moins un composé de silicium choisi entre les silanes, les silanols et les siloxanes ainsi qu'une teneur en au moins un composé choisi entre des composés de fluorures ou carbonates ou nitrates ou composés organiques complexes de titane, de hafnium ou de zirconium, voire d'un mélange quelconque de ceux-ci.

2. Procédé selon la revendication 1, moyennant quoi un film mince B de la composition siloxane est appliqué, qui est sans particules, fibres, morceaux de peluche et d'autres matériaux générant des défauts ayant un diamètre ou une épaisseur inférieur(e) ou égal(e) à 10 µm.

3. Procédé selon la revendication 1, moyennant quoi un film mince B de la composition siloxane est appliqué, qui a une épaisseur de film humide dans la plage de 0,005 à 40 µm.

4. Procédé selon la revendication 1, moyennant quoi un film mince B de la composition siloxane est appliqué, qui a une épaisseur de film sec dans la plage de 0,001 à 3 µm.

5. Procédé selon la revendication 1, moyennant quoi un film mince B de la composition siloxane est appliqué, puis le film mince est séché, par ex. à une température dans la plage de 5 à 300 °C.

6. Procédé selon la revendication 1, moyennant quoi un film mince B est appliqué avec la composition siloxane et séché par autoséchage par ex. à température ambiante, par chauffage du substrat métallique revêtu, par chauffage à l'air chaud, par soufflage ou chauffage avec un flux de gaz chaud ou par une combinaison quelconque de ceux-ci.

7. Procédé selon la revendication 1, moyennant quoi un film mince B de la composition siloxane est appliqué par pulvérisation de la composition siloxane avec une bombe de pulvérisation.

8. Procédé selon la revendication 1, moyennant quoi un film mince B de la composition siloxane est appliqué à l'aide d'un outil tel qu'une brosse, une éponge, un tampon, un bâton ou un sachet de gel.

9. Procédé selon la revendication 1, moyennant quoi la composition siloxane présente une viscosité dans la plage de 1 à 250 mPa·s mesurée à 20 °C.

10. Procédé selon la revendication 1, moyennant quoi la composition siloxane est appliquée sur au moins une surface métallique de fer, acier, acier revêtu de zinc ou revêtu d'un alliage de zinc, aluminium, alliage d'aluminium, alliage de magnésium, titane, alliage de titane ou un mélange quelconque de ceux-ci.

11. Procédé selon la revendication 1, moyennant quoi la composition siloxane est appliquée sur au moins une surface d'au moins une partie montrant au moins deux matériaux différents sur sa ou ses surfaces, composée d'au moins un matériau métallique, d'au moins un matériau plastique tel qu'une pellicule, une multicouche, une feuille ou un composant de matériau plastique, d'au moins un matériau en verre, d'au moins un matériau en céramique, d'au moins un matériau en bois ou d'un mélange quelconque de ceux-ci.

12. Procédé selon la revendication 1, moyennant quoi la composition siloxane est appliquée sur au moins une surface métallique d'au moins une feuille, sur au moins une partie formée complexe, sur au moins une partie massive ou un mélange quelconque de celles-ci.

13. Procédé selon la revendication 1, moyennant quoi la composition siloxane est appliquée sur au moins une surface métallique d'une bobine, d'une feuille métallique, d'une carrosserie de voiture, de pièces d'une voiture, d'une carrosserie d'un appareil aérospatial, d'un bateau, d'un équipement en haute mer, d'un train ou de parties quelconques de celui-ci, de pièces ou pièces composées pour la construction, les meubles, les dispositifs ou l'équipement (soit pendant la production, soit après un endommagement ou après une utilisation sur le long terme).

14. Procédé selon la revendication 1, moyennant quoi au moins un revêtement de protection contre la corrosion C est appliqué sur le film mince B moyennant quoi le revêtement C est généré avec une composition organique telle qu'un apprêt, un apprêt humide, un revêtement électrostatique, un revêtement pulvérulent, un revêtement de base ou un revêtement transparent ou avec un revêtement ayant une composition siloxane identique ou différente par rapport au film mince B ou avec une succession d'applications de telles compositions, moyennant quoi au moins un revêtement C peut éventuellement être appliqué sur une grande partie ou sur la surface entière de la partie métallique revêtue.

15. Procédé selon la revendication 1, moyennant quoi la composition siloxane pour la génération du ou des revêtements de protection contre la corrosion C sont des solutions ou des dispersions qui contiennent au moins un composé de silicium choisi dans le groupe des silanes, des silanols et des siloxanes.

16. Procédé selon la revendication 1, moyennant quoi les compositions siloxane pour la génération du ou des revêtements de protection contre la corrosion B, C ou une combinaison quelconque de ceux-ci sont des solutions ou des dispersions qui contiennent une teneur en au moins un silane partiellement hydrolysé, au moins un silane totalement hydrolysé, au moins un siloxane oligomère, au moins un siloxane polymère ou un mélange quelconque de ceux-ci.

17. Procédé selon la revendication 1, moyennant quoi les compositions siloxanes pour la génération du ou des revêtements de protection contre la corrosion B, C ou une combinaison quelconque de ceux-ci sont des solutions ou des dispersions qui contiennent au moins un composé de silicium choisi entre les silanes et les siloxanes ainsi qu'une teneur en au moins un acide tel que l'acide acétique, l'acide acétique glacial, un autre acide carbonique, l'acide sulfurique, l'acide chlorhydrique, l'acide nitrique, l'acide fluorique, tout acide contenant du phosphore ou un mélange quelconque de ceux-ci.

18. Procédé selon la revendication 1, moyennant quoi les compositions siloxane pour la génération du ou des revêtements de protection contre la corrosion B, C ou une combinaison quelconque de ceux-ci sont des solutions ou des dispersions qui contiennent au moins un composé de silicium choisi entre des silanes et des siloxanes ainsi qu'une teneur en au moins un solvant organique tel qu'un alcool tel que le méthanol, l'éthanol, le propanol ou un mélange quelconque de ceux-ci.

19. Procédé selon la revendication 1, moyennant quoi les compositions siloxane pour la génération du ou des revêtements de protection contre la corrosion B, C ou une combinaison quelconque de ceux-ci sont des solutions ou des dispersions qui contiennent au moins un composé de silicium choisi entre des silanes, des silanols et des siloxanes ainsi qu'une teneur en au moins un additif choisi dans le groupe constitué par des particules ayant une granulométrie inférieure à un micromètre, des tensioactifs, des colorants, des agents fluorescents, des agents biocides, des agents d'ajustement du pH, des chélates, des agents de réticulation adaptés à une réticulation chimique sous influence thermique, des photo-initiateurs et des substances pour la génération d'un gel.

20. Procédé selon la revendication 1, moyennant quoi les compositions siloxane pour la génération du ou des revêtements de protection contre la corrosion B ou C sont des solutions ou des dispersions qui contiennent au moins un composé de silicium choisi entre les silanes, les silanols et les siloxanes ainsi qu'une teneur en au moins un agent contenant de l'azote tel que le nitrate, le nitrite ou un composé guanidine.

21. Procédé selon la revendication 1, moyennant quoi les compositions siloxane pour la génération du ou des revêtements de protection contre la corrosion B, C ou une combinaison quelconque de ceux-ci sont des solutions ou des dispersions qui contiennent au moins un composé de silicium choisi entre des silanes, des silanols et des siloxanes qui possède au moins un groupe fonctionnel choisi dans le groupe constitué par le groupe amine, époxy, glycidoxy, isocyanato, mercapto, (méth)acrylato, (poly)sulfure, uréido, vinyle et vinylbenzène.
